# FASCICULE DE BREVET EUROPEEN

(11) **EP 2 221 242 B1**
(45) Date de publication et mention de la délivrance du brevet: **18.09.2013**
(21) Numéro de dépôt: 10153853.6
(22) Date de dépôt: 17.02.2010
(51) Int. Cl.: B62J 27/00

(54) **Dispositif de sécurité pour passager d`un véhicule muni d`une selle.**
Sicherheitsvorrichtung für den Beifahrer eines Grätschsitzfahrzeugs
Safety device for the passenger of a straddle-ride type vehicle

(30) Priorité: 20.02.2009 FR 0951107
(43) Date de publication de la demande: 25.08.2010
(73) Titulaire: Veector, 06100 Nice (FR)
(72) Inventeur: Ballast, Jean-Raymond, 06000, NICE (FR)
(74) Mandataire: Decobert, Jean-Pascal

(56) Documents cités:
- EP-A- 0 860 397
- US-A- 3 940 166
- US-A- 4 560 097
- US-A- 5 553 915
- US-A1- 2008 217 969

## Description

La présente invention concerne un véhicule comprenant un dispositif de sécurité pour le passager du véhicule. Elle trouvera son application notamment pour les véhicules comprenant une selle tels que des motos, scooters, quads, etc., où le conducteur et le passager sont assis l'un derrière l'autre.

En effet, ce type de véhicule présente une sécurité limitée en particulier pour le passager qui doit se tenir fermement au conducteur, ou au véhicule, pour ne pas être éjecté lors des virages et/ou accélérations. Les enfants en bas âges ont tout particulièrement des difficultés pour se maintenir correctement sur ces véhicules.

Il existe des dispositifs de l'état de la technique comprenant un harnais pour le passager relié à un harnais porté par le conducteur. Cependant lors d'un accident, le conducteur et le passager sont attachés et risquent notamment d'être emportés avec le véhicule. Ces dispositifs ne sont donc pas satisfaisants d'un point de vue sécurité.

On connaît aussi des dispositifs où le passager est attaché au véhicule (voir par example US-A-3940166). Lors d'accident le passager est entraîné avec le véhicule. Le passager n'est pas non plus en sécurité avec ce type de dispositifs.

Il existe donc le besoin de proposer un dispositif de sécurité pour passager amélioré présentant une meilleure sécurité.

A cet effet, la présente invention concerne un dispositif de sécurité pour passager d'un véhicule comprenant un moyen d'attache du passager relié à un moyen de rétention. Le moyen de rétention consiste en un élément d'appui configuré de manière caractéristique pour être posé sur la selle du véhicule au niveau de la zone de placement du conducteur, l'élément d'appui ne comprenant pas de moyen de fixation au véhicule.

Ainsi, lors de son utilisation, le moyen de rétention est situé entre la zone de placement du conducteur et le conducteur lui-même.

Avec le dispositif de l'invention, le conducteur exerce une force, due à son poids, sur le moyen de rétention bloquant ainsi l'élément d'appui entre lui et la selle du véhicule. Le passager est attaché par le moyen d'attache relié aux moyens de rétention. Le passager est donc maintenu sur la selle à proximité du conducteur notamment lors des virages et / ou des accélérations. Ainsi, en l'absence de conducteur, l'élément d'appui est posé sur la selle, il ne subit que la force due à son poids. Notamment, dans une situation d'accident, le passager n'est attaché qu'au dispositif. Le passager n'est ni attaché au véhicule ni au conducteur. Ainsi, le passager ne risque pas d'être entraîné dans sa chute avec le véhicule. De plus, le dispositif selon l'invention étant peu encombrant le passager ne peut pas être blessé par le dispositif.

D'autres but et avantages apparaîtront au cours de la description qui suit d'un mode préféré de réalisation qui n'en est cependant pas limitatif.

Il convient tout d'abord de rappeler que l'invention est un véhicule de sécurité comprenant une selle comprenant une zone de placement d'un conducteur et une zone de placement d'un passager, et un dispositif de sécurité pour passager comprenant un moyen d'attache du passager relié à un moyen de rétention du passager caractérisé par le fait que le moyen de rétention du passager consiste en un élément d'appui posé sur la zone de placement du conducteur, l'élément d'appui ne comprenant pas de moyen de fixation au véhicule.

Suivant des variantes préférées mais non limitatives, le dispositif de sécurité du véhicule selon l'invention est tel que :
- l'élément d'appui comprend une première zone de contact posée au niveau de la zone de placement du conducteur destinée à recevoir les fesses du conducteur.
- l'élément d'appui comprend une deuxième zone de contact posée au niveau de la zone de placement du conducteur destinée à être en contact avec les jambes du conducteur.
- l'élément d'appui comprend une zone de contact posée au niveau de la zone de placement du conducteur destinée à recevoir le dos du conducteur.
- il comprend un moyen de liaison destiné à relier le moyen d'attache au moyen de rétention.
- l'élément d'appui comprend un passage traversant longitudinalement ledit élément de sorte à recevoir le moyen de liaison de part en part.
- le moyen de liaison est mobile dans le passage.
- la longueur du moyen de liaison entre le moyen d'attache et le moyen de rétention est variable.
- le moyen de rétention comprend un moyen de fixation du moyen de liaison.
- le moyen de fixation est disposé sur l'élément d'appui dans une zone avant.

L'invention concerne aussi un procédé d'utilisation d'un véhicule muni d'un dispositif de sécurité pour passager comprenant les étapes de :
- fixation d'un moyen d'attache au passager
- placement du passager sur sa zone de placement
- placement sans fixation de l'élément d'appui sur la selle au niveau de la zone de placement du conducteur
- placement du conducteur sur sa zone de placement
- maintien de l'élément d'appui sur la zone de placement du conducteur par la force exercée par le poids du conducteur.

Les dessins ci-joints sont donnés à titre d'exemples et ne sont pas limitatifs de l'invention. Ils représentent seulement un mode de réalisation de l'invention et permettront de la comprendre aisément.
Figure 1 : Schéma de principe du dispositif selon l'invention lors de son utilisation.
Figure 1A : Vue de la figure 1 selon la coupe AA représentant la zone de contact 7.
Figure 1B : Vue de la figure 1 selon la coupe BB représentant la zone de contact 9.
Figure 2 : Vue du dessus du dispositif selon l'invention.
Figure 3 : Vue du dessus de l'élément d'appui du dispositif.
Figure 4 : Vue de l'élément d'appui selon la figure 3 en coupe AA.
Figure 5 : Vue du dessus de l'élément de liaison et du moyen d'attache en position fermée.
Figure 6 : Vue du dessus de l'élément de liaison et du moyen d'attache en position ouverte.

Le dispositif selon l'invention est destiné à être utilisé sur des véhicules munis d'une selle 4 tels que des motos, des scooters, des quads et autres types de motoneiges, scooters des mers etc. Sur ces types de véhicules, le conducteur 5 est assis devant le passager 6. La selle comprend une zone de placement du conducteur 5 et une zone de placement du passager 6.

Le présent dispositif de sécurité comprend un moyen d'attache 1 du passager 6 relié à un moyen de rétention 2 du passager 6. Préférentiellement, le moyen d'attache 1 est relié au moyen de rétention 2 par un moyen de liaison 3.

Selon une première possibilité, chaque élément est indépendant, c'est-à-dire que le moyen d'attache 1, le moyen de liaison 3 et le moyen de rétention 2 sont des pièces indépendantes reliées entres-elles par des attaches.

Selon une autre possibilité, le dispositif de l'invention est monobloc, c'est-à-dire que le moyen d'attache 1, le moyen de liaison 3 et le moyen de rétention 2 sont formés d'une seule pièce.

Le moyen de rétention 2 comprend un élément d'appui 23 posé sur la zone de placement du conducteur 5 sur la selle 4 d'un véhicule.

On entend par zone de placement du conducteur 5, la portion de la selle 4 du véhicule qui est destinée à recevoir le conducteur 5 dans une position assise. Cette zone de placement comprend une partie recevant les fesses du conducteur éventuellement une partie recevant le bas du dos du conducteur et éventuellement une partie recevant les cuisses du conducteur.

On entend par posé que l'élément d'appui coopère avec la selle, en l'absence du conducteur, uniquement par son poids. L'élément d'appui ne comprend pas de moyen de fixation à la selle. L'élément d'appui ne s'accroche pas à la selle.

Le conducteur 5 s'assoit sur l'élément d'appui 23 du dispositif selon l'invention de sorte qu'il exerce une force due à son poids sur celui-ci le maintenant en position, sans moyen d'attache. Ainsi, le passager 6 est maintenu à une distante constante du conducteur 5. Il n'est pas projeté vers l'arrière lors des accélérations. En l'absence du conducteur, l'élément d'appui 23 se désolidarise de la selle 4.

Il est avantageux de prévoir que le dispositif selon l'invention présente plusieurs zones de contact avec la zone de placement du conducteur 5.

Dans la description qui suit, les termes avant / arrière sont à comprendre relativement au sens de marche du véhicule.

De manière principale, l'élément d'appui 23 comprend une première zone de contact 7 entre le conducteur 5 et la selle 4 du véhicule. La première zone de contact 7 de l'élément d'appui 23 correspond à la zone de placement du conducteur 5 sur la selle 4 destinée à recevoir et / ou à être en contact avec les fesses 10 du conducteur 5. C'est-à-dire que cette première zone de contact est posée entre les fesses 10 du conducteur 5 et la selle 4 du véhicule.

On entend par fesses 10 la partie du corps d'un être humain comprise entre le bas du dos et le début des cuisses, soit la région postérieure du bassin.

De manière optionnelle, l'élément d'appui 23 comprend d'autres zones de contact telle qu'une deuxième zone de contact 8 située en arrière de la première zone de contact 7. Cette deuxième zone de contact 8 est destinée à être posée sur la zone de placement du conducteur 5 sur la selle 4 destinée à coopérer avec le dos 12 du conducteur 5, c'est-à-dire entre le dos 12 du conducteur 5 et la selle 4 du véhicule. On entend par dos la partie postérieure du tronc d'un homme qui s'étend des épaules aux reins. Plus précisément, l'élément d'appui est en contact avec le bas du dos, soit au niveau des reins.

Cette zone de contact 8 est particulièrement utile lorsque la selle 4 du véhicule comprend une démarcation entre la zone de placement du conducteur 5 et la zone de placement du passager 6. Ainsi l'élément d'appui 23 et notamment la deuxième zone de contact 8 se place au niveau de la démarcation de la selle 4 du véhicule.

Une autre zone de contact 9 peut être prévue en avant de la première zone de contact 7. Cette zone de contact 9 est destinée à être posée sur la zone de placement du conducteur 5 sur la selle 4 destinée à être en contact avec les jambes 11 du conducteur c'est-à-dire entre les jambes 11 du conducteur et la selle 4 du véhicule. On entend par jambes 11 du conducteur la partie de chacun des membres inférieurs de l'homme qui s'étend des hanches aux pieds. Cette zone de contact 9 est plus précisément au contact préférentiellement de l'entre jambe et / ou du bas des cuisses et / ou des genoux et / ou du haut des mollets du conducteur 5.

Selon un mode de réalisation, l'élément d'appui 23 comprend des parties latérales 20 sur lesquelles les fesses 10 du conducteur 5 reposent principalement. Selon une possibilité, les parties latérales 20 se prolongent de part et d'autres de la selle 4 du véhicule. Le conducteur 5 sert ses jambes 11 et plus particulièrement l'intérieur de ses cuisses contre ses parties latérales 20 débordantes.

Les zones latérales 20 de l'élément d'appui 23 peuvent être du type rembourrées de sorte à améliorer le confort du conducteur 5. Pour encore plus de confort, l'ensemble de l'élément d'appui 23 peut être rembourré.

Selon une possibilité, l'élément d'appui se prolonge au niveau de la zone de placement du passager.

De sorte à accroître la résistance de l'élément d'appui 23, il est avantageux d'utiliser un matériau ayant un coefficient de friction important tel qu'à titre d'exemple du polychloroprène connu sous la marque déposée Néoprène®. Ainsi, lorsque le conducteur 5 est assis sur l'élément d'appui 23, les forces de frottement entre le conducteur 5 et l'élément d'appui 23 et entre la selle 4 et l'élément d'appui 23 sont augmentées et ce qui conduit à augmenter le blocage du moyen de rétention 2 et donc le maintien du passager 6.

Le moyen de rétention 2 et plus particulièrement l'élément d'appui 23 est préférentiellement en matériau souple, de sorte à faciliter son repliement. Ceci permet aussi à l'élément d'appui 23 de s'adapter à la forme de la selle 4 sans inconfort pour le conducteur 5.

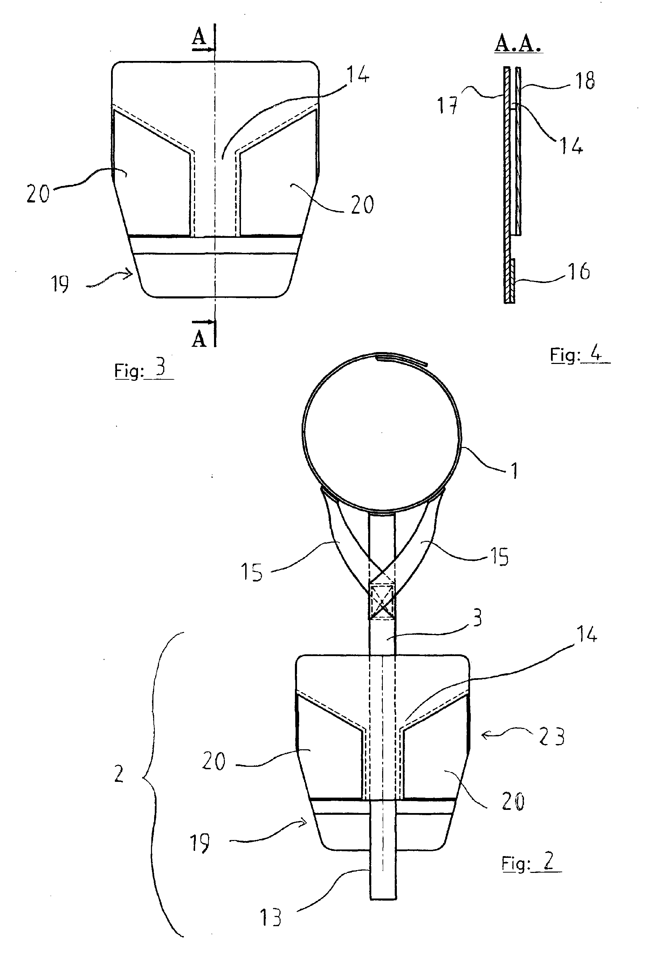

Selon un premier mode de réalisation non représenté, l'élément d'appui 23 est profilé selon la forme représentée sur les figures 2 et 3 de sorte à s'adapter à la morphologie du conducteur 5 lorsque celui-ci est assis sur une selle 4. A cet effet, l'élément d'appui 23 présente une forme sensiblement trapézoïdale plus élargie dans sa zone arrière et plus rétrécie dans sa zone avant 19.

Selon un deuxième mode de réalisation non représenté, l'élément d'appui 23 est profilé pour que la zone de contact 9 soit la plus importante possible. Ainsi, l'élément d'appui 23 est de forme sensiblement trapézoïdale plus élargi dans sa zone avant que dans sa zone arrière.

Préférentiellement, le moyen d'attache 1 du passager 6 est constitué de sangles agencées pour former une ceinture ou un harnais. Le moyen d'attache 1 est préférentiellement adaptable à la taille du passager 6.

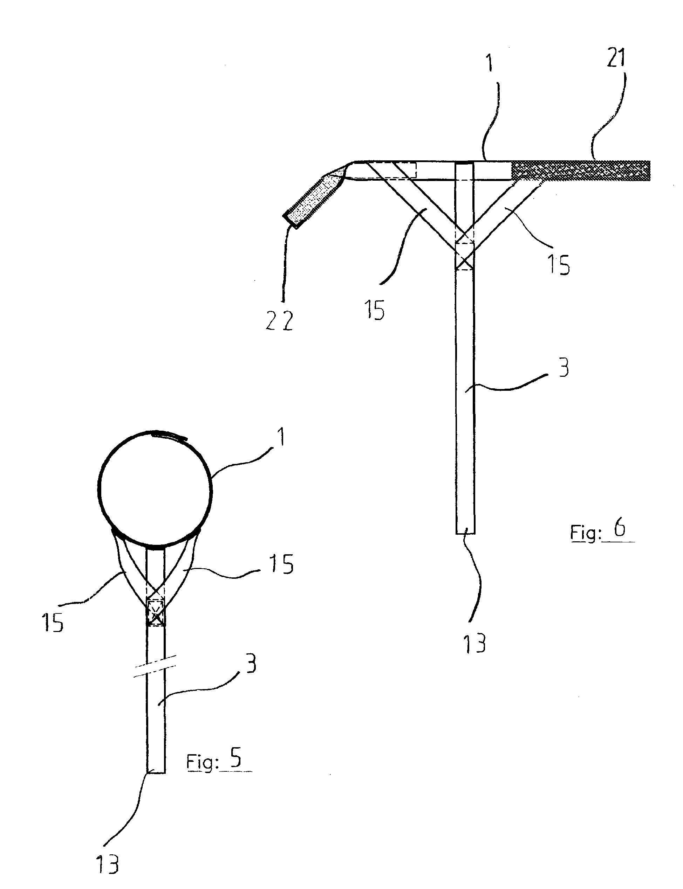

Tel que représenté en figure 6, le moyen d'attache 1 est formé d'une sangle munie à une de ses extrémités d'un moyen de fermeture femelle 21 et à l'autre de ses extrémités d'un moyen de fermeture mâle 22. Par exemple du ruban auto agrippant du type velcro® (marque déposée), on pourrait aussi utiliser des boutons pressions, boucles,....

Le moyen d'attache 1 selon l'invention est relié au moyen de rétention 2 par un moyen de liaison 3. Le moyen de liaison 3 est préférentiellement du type d'une sangle fixée à une de ses extrémités au moyen d'attache 1 et à son autre extrémité au moyen de rétention 2. Selon un autre, est mode de réalisation, le moyen de liaison 3, en matériau plastique ou autre, est fixé à une extrémité au moyen d'attache 1 et se prolonge à son autre extrémité pour former le moyen de rétention 2. Le moyen de rétention 2 et le moyen de liaison 3 sont monobloc. Ils sont formés par une seule pièce, de sorte à améliorer le confort du passager 6 au niveau du moyen d'attache 1, celui-ci peut comporter un dosseret rigide destiné à maintenir en position droite le dos du passager 6.

Pour améliorer le maintien du passager 6, il est avantageux d'utiliser des pattes de liaison 15 comme représenté en figure 6 reliant le moyen d'attache 1 au moyen de liaison 3. Les pattes de liaison 15 sont disposées de part et d'autre du moyen de liaison 3. Elles forment un V dont la base est située au niveau du moyen de liaison 3 et dont les extrémités sont situées sur le moyen d'attache 1. Ces pattes de liaison 15 permettent de répartir les forces de traction du moyen de liaison 3 sur le moyen d'attache 1 notamment lors de virage et de l'inclinaison du véhicule.

Selon un mode de réalisation préféré, l'élément d'appui 23 comprend un passage 14 traversant longitudinalement ledit élément. Le passage 14 se situe préférentiellement entre les deux parties latérales 20. Ce passage 14 est destiné à recevoir le moyen de liaison 3.

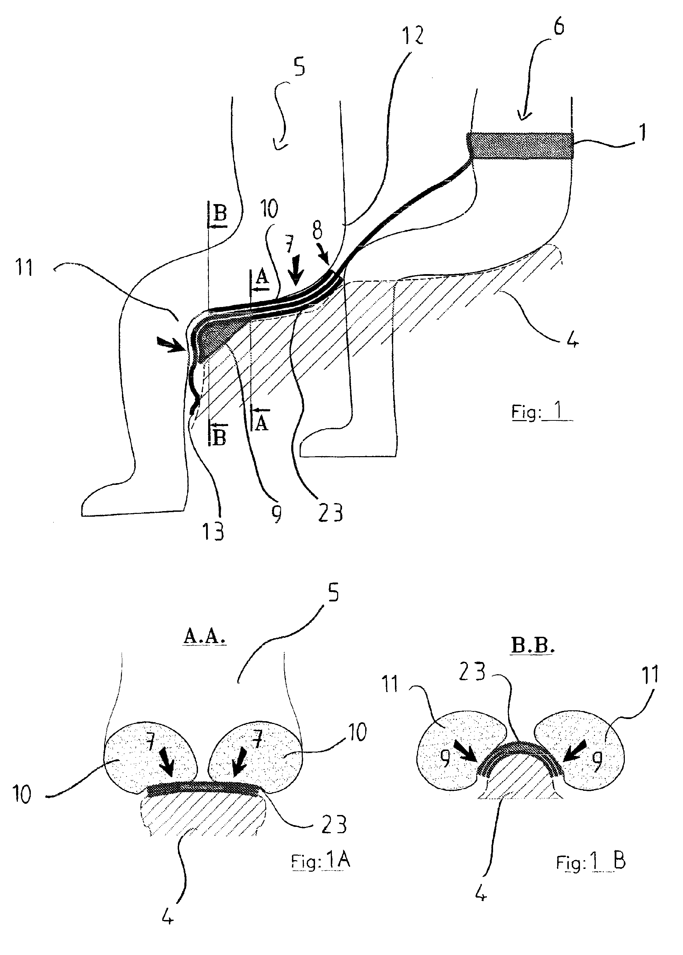

Comme représenté en figure 1 et 2, le moyen de liaison 3 traverse l'élément d'appui 23 au niveau du passage 14.

Il est avantageux de prévoir que le moyen de liaison 3 est ajustable en position dans le passage 14 permettant ainsi de faire varier la distance entre le moyen d'attache 1 et le moyen de rétention 2 c'est-à-dire entre le passager 6 et le conducteur 5.

De plus, le déposant s'est aperçu que ce mode de réalisation est satisfaisant d'un point de vue de la sécurité et du maintien du moyen de liaison 3 au niveau de l'élément d'appui 23. En effet, le moyen de liaison 3 traversant l'élément d'appui 23, la force exercée par le conducteur 5 sur l'élément d'appui 23 est aussi exercée sur le moyen de liaison 3 augmentant ainsi à la rétention du moyen d'attache 1 et donc du passager 6.

La distance entre le moyen d'attache 1 et le moyen de rétention 2 du dispositif est variable par traction sur l'extrémité libre 13 du moyen de liaison 3 ou sur le moyen d'attache 1.

Selon une possibilité, l'extrémité libre 13 du moyen de liaison 3 est munie de moyen de préhension facilitant sa prise et sa traction.

De sorte à fixer le moyen de liaison 3 au moyen de rétention 2, l'élément d'appui 23 comprend un moyen de fixation 16. Ce moyen de fixation 16 est disposé dans une zone avant 19 de l'élément d'appui 23. On entend par zone avant, la zone de l'élément d'appui située en premier relativement au sens du déplacement du véhicule. Préférentiellement, ce moyen de fixation 16 est constitué d'un moyen de fermeture mâle ou femelle coopérant avec un moyen de fermeture complémentaire mâle ou femelle disposé sur l'extrémité libre 13 de l'élément du moyen de liaison 3. A titre d'exemple, on peut utiliser du ruban auto agrippant du type Velcro® (marque déposée) ou bien des boutons pressions ou autres moyens de fermeture réversible.

Selon une autre possibilité, le moyen de liaison 3 est fixé d'une manière permanente au moyen de rétention 23.

Le passager 6 n'est pas attaché au conducteur 5.

L'élément d'appui 23 est préférentiellement composé de deux couches de matériaux superposées une couche inférieure 17 et une couche supérieure 18.

Selon un mode de réalisation préféré, ces deux couches 17, 18 de matériaux sont de formes différentes.

Comme représentée aux figures 3 et 4, la couche inférieure 17 a une superficie plus grande que la couche supérieure 18 de sorte que le moyen de fixation 16 est disposé dans la zone avant 19 de la couche inférieure 17.

Selon un autre mode de réalisation, les couches supérieure 18 et inférieure 17 sont de la même forme et le moyen de fixation 16 est disposé dans la zone avant 19 de la couche inférieure 17.

La couche inférieure 17 et la couche supérieure 18 sont assemblées l'une à l'autre par exemple par collage et /ou couture, en aménageant un passage 14 pour recevoir le moyen de liaison 3.

La couche inférieure 17 et la couche supérieure 18 peuvent être du même type de matériaux comme précisé précédemment préférentiellement d'un type de matériaux ayant des coefficients de frottement importants tel que du néoprène®, caoutchouc, tissu imbibé,...

De manière pratique, le dispositif selon l'invention s'utilise comme suit :
le passager 6 s'attache au moyen d'attache 1 plus précisément en adaptant le harnais ou la ceinture du moyen d'attache 1 autour de lui. Puis le passager 6 s'assoit en position sur la selle 4 du véhicule au niveau de sa zone de placement. Le moyen de rétention 2 est posé sur la selle 4 au niveau de la zone de placement du conducteur 5. Le conducteur 5 s'assoit sur sa zone de placement sur la selle 4 et donc sur l'élément d'appui 23 du dispositif selon l'invention. Selon certain mode de réalisation il peut alors modifier la distance entre lui et le passager 6 en faisant varier la distance entre le moyen de rétention 2 et le moyen d'attache 1. Pour rapprocher le passager 6 de lui, il exerce une traction sur l'extrémité libre 13 du moyen de liaison 3 disposé entre ses jambes 11. Lorsqu'il exerce la traction sur l'extrémité libre 13 du moyen de liaison 3 il peut légèrement soulever son corps de sorte à diminuer la force exercée sur l'élément d'appui 23 et ainsi permettre le déplacement de l'élément du moyen de liaison 3 au travers du passage 14 de l'élément d'appui 23.

S'il souhaite éloigner le passager 6 de lui, le passager 6 ou le conducteur 5 exerce une traction au niveau du moyen d'attache 1 et / ou de l'extrémité du moyen de liaison 3 relié au moyen d'attache 1.

Une fois le passager 6 correctement positionné relativement au conducteur 5, le véhicule peut être utilisé en toute sécurité.

Le dispositif selon l'invention présente en plus l'avantage d'être simple à utiliser et rapide. Enfin, du fait de sa faible taille, il peut être facilement placé dans les compartiments de rangement des motos ou scooters qui sont d'un volume limité. Pour cela, l'élément d'appui 23 est préférentiellement dans un matériau souple.

### REFERENCES

- 1.: Moyen d'attache
- 2.: Moyen de rétention
- 3.: Moyen de liaison
- 4.: Selle
- 5.: Conducteur
- 6.: Passager
- 7.: Première zone de contact
- 8.: Deuxième zone de contact
- 9.: Zone de contact
- 10.: Fesses du conducteur
- 11.: Jambes du conducteur
- 12.: Dos du conducteur
- 13.: Extrémité libre de l'élément de liaison
- 14.: Passage
- 15.: Pattes de liaison
- 16.: Moyen de fixation
- 17.: Couche inférieure
- 18.: Couche supérieure
- 19.: Zone avant
- 20.: Zones latérales
- 21.: Moyen de fermeture femelle
- 22.: Moyen de fermeture mâle
- 23.: Elément d'appui

## Revendications

1. Véhicule comprenant une selle comprenant une zone de placement d'un conducteur (5) et une zone de placement d'un passager, et un dispositif de sécurité pour passager (6) comprenant un moyen d'attache (1) du passager (6) relié à un moyen de rétention (2) du passager **caractérisé par le fait**
**que** le moyen de rétention (2) du passager (6) consiste en un élément d'appui (23) posé sur la zone de placement du conducteur (5), l'élément d'appui ne comprenant pas de moyen de fixation au véhicule.

2. Véhicule selon la revendication 1 dans lequel l'élément d'appui (23) comprend une première zone de contact (7) disposée au niveau de la zone de placement du conducteur (5) destinée à recevoir les fesses (10) du conducteur (5).

3. Véhicule selon la revendication 2 dans lequel l'élément d'appui (23) comprend une deuxième zone de contact (8) disposée au niveau de la zone de placement du conducteur (5) destinée à recevoir le dos (12) du conducteur (5).

4. Véhicule selon une quelconque des revendications 2 à 3 dans lequel l'élément d'appui (23) comprend une zone de contact disposée au niveau de la zone de placement du conducteur (5) destinée à être en contact avec les jambes (11) du conducteur (5).

5. Véhicule selon une quelconque des revendications 1 à 4 dans lequel le dispositif de sécurité comprenant un moyen de liaison (3) destiné à relier le moyen d'attache (1) au moyen de rétention (2).

6. Véhicule selon la revendication 5 dans lequel l'élément d'appui (23) comprend un passage (14) traversant longitudinalement ledit élément de sorte à recevoir le moyen de liaison (3) de part en part.

7. Véhicule selon la revendication 5 ou 6 dans lequel le moyen de liaison (3) est mobile dans le passage (14).

8. Véhicule selon une quelconque des revendications 5 à 7 dans lequel la longueur du moyen de liaison (3) entre le moyen d'attache (1) et le moyen de rétention (2) est variable.

9. Véhicule selon la revendication 8 dans lequel le moyen de rétention (2) comprend un moyen de fixation (16) du moyen de liaison (3).

10. Véhicule selon la revendication 9 dans le moyen de fixation (16) est disposé sur l'élément d'appui (23) dans une zone avant (19).

11. Procédé d'utilisation d'un véhicule muni d'un dispositif de sécurité pour passager (6) selon l'une quelconque des revendications précédentes comprenant les étapes de :
- fixation d'un moyen d'attache (1) au passager (6)
- placement du passager sur sa zone de placement
- placement sans fixation de l'élément d'appui (23) sur la selle (4) au niveau de la zone de placement du conducteur (5)
- placement du conducteur sur sa zone de placement
- maintien de l'élément d'appui (23) sur la zone de placement du conducteur par la force exercée par le poids du conducteur.

## Patentansprüche

1. Fahrzeug mit einem Sattel, der einen Sitzbereich für einen Fahrer (5) und einen Sitzbereich für einen Beifahrer besitzt, sowie eine Sicherheitsvorrichtung für den Beifahrer (6) mit einem Befestigungsmittel (1) des Beifahrers (6), das mit einer Rückhalteeinrichtung (2) des Beifahrers verbundenen ist, **gekennzeichnet dadurch, dass** die Rückhalteeinrichtung (2) des Beifahrers (6) aus einem Auflageelement (23) besteht, das auf dem Sitzbereich des Fahrers (5) platziert wird, wobei das die Auflage darstellende Element kein Befestigungsmittel am Fahrzeug besitzt.

2. Fahrzeug gemäß Patentanspruch 1, bei dem das Auflageelement (23) eine erste Kontaktzone (7) besitzt, die im Sitzbereich des Fahrers (5) angeordnet und dazu bestimmt ist, das Gesäß (10) des Fahrers (5) aufzunehmen.

3. Fahrzeug gemäß Patentanspruch 2, bei dem das Auflageelement (23) eine zweite Kontaktzone (8) besitzt, die im Sitzbereich des Fahrers (5) angeordnet und dazu bestimmt ist, den Rücken (12) des Fahrers (5) aufzunehmen.

4. Fahrzeug gemäß einem der Patentansprüche 2 bis 3, bei dem das Auflageelement (23) eine Kontaktzone besitzt, die im Sitzbereich des Fahrers (5) angeordnet und dazu bestimmt ist, mit den Beinen (11) des Fahrers (5) Kontakt zu haben.

5. Fahrzeug gemäß einem der Patentansprüche 1 bis 4, bei dem die Sicherheitseinrichtung ein Verbindungsmittel (3) besitzt, das zur Verbindung des Befestigungsmittels (1) mit der Rückhalteeinrichtung (2) bestimmt ist.

6. Fahrzeug gemäß Patentanspruch 5, bei dem das Auflageelement (23) einen in Längsrichtung angeordneten Durchgang (14) durch das besagte Element aufweist, so dass das Verbindungsmittel (3) von einer bis zur anderen Seite aufgenommen wird.

7. Fahrzeug gemäß Patentanspruch 5 oder 6, bei dem das Verbindungsmittel (3) im Durchgang (14) beweglich ist.

8. Fahrzeug gemäß einem der Patentansprüche 5 bis 7, bei dem die Länge des Verbindungsmittels (3) zwischen dem Befestigungsmittel (1) und der Rückhalteeinrichtung (2) variabel ist.

9. Fahrzeug gemäß Patentanspruch 8, bei dem die Rückhalteeinrichtung (2) ein Befestigungsmittel (16) für das Verbindungsmittel (3) aufweist.

10. Fahrzeug gemäß Patentanspruch 9, bei dem das Befestigungsmittel (16) auf dem Auflageelement (23) in einer vorne liegenden Zone (19) angeordnet ist.

11. Verfahren zur Benutzung eines mit einer Sicherheitseinrichtung für einen Beifahrer (6) versehenen Fahrzeugs gemäß einem der vorstehenden Patentansprüche mit folgenden Schritten:
- Befestigung eines Befestigungsmittels (1) am Beifahrer (6)
- Aufsitzen des Beifahrers auf seinem Sitzbereich
- Auflegen des Auflageelements (23), ohne es zu befestigen, auf dem Sattel (4) in Höhe des Sitzbereichs des Fahrers (5)
- Aufsitzen des Fahrers auf seinem Sitzbereich
- Halten des Auflageelements (23) auf dem Sitzbereich des Fahrers durch die aufgrund des Fahrergewichts ausgeübten Kraft.

## Claims

1. Vehicle comprising a saddle with a driver's positioning area (5) and a driver's positioning area for a passenger, and a safety device for a passenger (6) comprising an attaching means (1) of the passenger (6) joined to a retaining means (2) of the passenger, **characterized in that**
the retaining means (2) of the passenger (6) consists of a support element (23) placed on the driver's positioning area, the support element not being equipped with fixing means to the vehicle.

2. Vehicle according to claim 1 wherein the support element (23) comprises a first contact zone (7) placed on the driver's positioning area for receiving the buttocks (10) of the driver (5).

3. Vehicle according to claim 2 wherein the support element (23) comprises a second contact zone (8) placed on the driver's positioning area (5) for receiving the driver's positioning area (5) back (12).

4. Vehicle according to any one of claims 2 to 3 wherein the support element (23) comprises a contact zone placed on the driver's positioning area (5) for being in contact with the driver's positioning area (5) legs (11).

5. Vehicle according to any one of claims 1 to 4 wherein the safety device comprises a connecting means (3) for connecting the attaching means (1) to the retaining means (2).

6. Vehicle according to claim 5 wherein the support element (23) comprises a passage (14) extending longitudinally through said member so as to receive the connecting means (3) through and through.

7. Vehicle according to claim 5 or 6 wherein the connecting means (3) is movable in the passage (14).

8. Vehicle according to any one of claims 5 to 7 wherein the length of the connecting means (3) between the attaching means (1) and the retention means (2) is variable.

9. Vehicle according to claim 8 wherein the retention means (2) comprises a fixing means (16) of the connecting means (3).

10. Vehicle according to claim 9, wherein the fixing means (16) is placed in the front zone (19) on the support element (23).

11. A procedure for operating a vehicle equipped with a safety device for the passenger (6) according to any preceding claim, comprising the following steps:
* fixing the attaching means (1) to the passenger (6)
* placing the passenger at his/her positioning area
* placing, without fixing, the support element (23) on the saddle (4) at the driver's positioning area (5).
* placing the driver at his/her positioning area
* maintaining the support element (23) on the driver's positioning area by the force applied by the weight of the driver
